# EUROPÄISCHE PATENTSCHRIFT

(11) **EP 4 114 735 B1**
(45) Veröffentlichungstag und Bekanntmachung des Hinweises auf die Patenterteilung: **01.05.2024**
(21) Anmeldenummer: 21714314.8
(22) Anmeldetag: 02.03.2021
(51) Int. Cl.: B64D 11/06, B60N 2/90, B60N 3/06, B64D 25/04

(54) **BEINAUFLAGE EINES FLUGGASTSITZES MIT EINER VORRICHTUNG**
LEG REST FOR AN AIRCRAFT PASSENGER SEAT, COMPRISING A DEVICE
REPOSE-JAMBES POUR SIÈGE PASSAGER D'AÉRONEF, COMPRENANT UN DISPOSITIF

(30) Priorität: 05.03.2020 DE 102020106032
(43) Veröffentlichungstag der Anmeldung: 11.01.2023
(73) Patentinhaber: ZIM Aircraft Seating GmbH, 88090 Immenstaad am Bodensee (DE)
(72) Erfinder: JENSEN, Alexander, 88046 Friedrichshafen (DE); DITTRICH, Marc, 88279 Amtzell (DE)
(74) Vertreter: Otten, Roth, Dobler & Partner mbB Patentanwälte
(86) Internationale Anmeldenummer: PCT/EP2021/055123
(87) Internationale Veröffentlichungsnummer: WO 2021/175818

(56) Entgegenhaltungen:
- EP-A1- 2 965 990
- WO-A1-2016/184597
- WO-A2-2015/189721
- DE-A1- 19 944 619
- US-A- 5 335 882

## Beschreibung

### Stand der Technik

Ein Fluggastsitz mit einer Unterbringungsmöglichkeit für eine Schwimmweste ist bekannt. Bei bekannten Fluggastsitzen ist die Schwimmweste unter einer Sitzfläche des Fluggastsitzes oder unterhalb der Armlehne in einer Schwimmwestenaufnahme untergebracht.

Nachteilig an diesen bekannten Unterbringungsorten für die Schwimmweste ist, dass bei einer Unterbringung der Schwimmweste unterhalb der Armlehne beispielsweise Stauraum für andere Komponenten, z.B. Multimedia-Komponenten, des Fluggastsitz beschränkt ist oder die Schwimmweste vergleichsweise schwer zugänglich ist. Beispielsweise ist eine Zugänglichkeit der Schwimmweste bei einer Unterbringung der Schwimmweste unter der Sitzfläche des Fluggastsitz bei einem Fluggastsitz mit Beinauflage nicht gegeben. DE 199 44 619 A1 beschreibt einee Unterbringungsmöglichkeit der Schwimmweste in einer Beinauflage eines Fluggastsitzes.

### Aufgabe und Vorteile der Erfindung

Der Erfindung liegt die Aufgabe zugrunde eine verbesserte Unterbringungsmöglichkeit für eine Schwimmweste an einem Fluggastsitz bereitzustellen. Insbesondere eine Vorrichtung zur Montage am Fluggastsitz bereitzustellen, mittels welcher ein Zugang zu einer Schwimmweste erleichtert ist und vorteilhafterweise Stauraum für weitere Komponenten des Fluggastsitz freigegeben ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Beinauflage eines Fluggastsitzes mit einer Vorrichtung aus. Beispielsweise ist die Beinauflage als eine Fluggastsitz-Beinauflage vorhanden.

Vorteilhafterweise umfasst der Fluggastsitz eine bewegliche Beinauflage, welche aus einer Grundposition in eine Ruheposition schwenkbar ist und umgekehrt. Bevorzugterweise ist die Beinauflage in der Ruheposition derart ausgeschwenkt am Fluggastsitz vorhanden, dass ein Fluggast, welcher den Fluggastsitz nutzt, seine Beine an der Beinauflage auflegen kann.

Der Kern der Erfindung ist darin zu sehen, dass die Vorrichtung ein Gehäuse umfasst, wobei das Gehäuse zwei Gehäusehälften aufweist, wobei die beiden Gehäusehälften schwenkbeweglich miteinander verbunden sind, wobei das Gehäuse derart ausgebildet ist, dass eine Schwimmweste für einen Fluggast darin verstaubar ist, wobei an einer Gehäusehälfte ein Sitzbezug des Fluggastsitzes anordenbar ist, sodass die Vorrichtung einen Teil einer Nutzfläche der Beinauflage bildet, wobei die Vorrichtung an einer Grundstruktur der Beinauflage angeordnet ist. Hierdurch ist eine Schwimmweste vergleichsweise leicht zugänglich am Fluggastsitz verstaubar.

Bevorzugterweise umfasst der Fluggastsitz ein Grundgestell, an welchem ein Sitzboden und eine Rückenlehne des Fluggastsitz angeordnet sind. Vorteilhafterweise sind der Sitzboden und die Rückenlehne beweglich zum Grundgestell oder zu Teilen des Grundgestells vorhanden.

Beispielsweise umfasst der Fluggastsitz eine am Grundgestell oder eine an einem Teil des Grundgestells beweglich angeordnete Beinauflage. Vorteilhafterweise ist die Grundstruktur der Beinauflage als ein Rahmen oder als eine Stützstruktur der Beinauflage ausgebildet. Zum Beispiel ist an der Grundstruktur der Beinauflage ein Polster der Beinauflage anordenbar. Vorteilhafterweise stützt die Grundstruktur das Polster gegen eine Kraft oder eine Belastung eines Fluggastsitz-Nutzers ab. Bevorzugterweise ist die Beinauflage, insbesondere ausschließlich über die Grundstruktur, mit dem verbleibenden Fluggastsitz, insbesondere mit dem Grundgestell, beweglich verbunden.

Vorteilhafterweise ist die Schwimmweste als eine Flugzeug-Schwimmweste ausgebildet, insbesondere als eine Fluggastsitz-Schwimmweste.

Bevorzugterweise ist eine Nutzfläche des Fluggastsitzes die Fläche des Fluggastsitzes, welche ein Nutzer oder Fluggast des Fluggastsitzes bei üblichem Gebrauch berührt, z.B. auf welcher er sitzt oder an welche er sich bzw. ein Körperteil anlehnt, z.B. an welche er seine Beine anlegt oder auflegt.

Erfindungsgemäß sind die Gehäusehälften fest, stabil und/oder starr ausgebildet. Beispielsweise sind die Gehäusehälften aus Metall und/oder einem stabilen Kunststoff ausgebildet. Zum Beispiel sind die Gehäusehälften ausschließlich aus Metall und/oder einem stabilen Kunststoff ausgebildet.

Zum Beispiel ist der Sitzbezug und/oder die Polsterung an einer ersten Gehäusehälfte der beiden Gehäusehälften anordenbar. Beispielsweise ist der Sitzbezug und/oder die Polsterung mittels eines Haken- und Ösenbands, eines sogenannten Klettbands anklettbar vorhanden. Denkbar ist auch, dass der Sitzbezug und/oder die Polsterung an der ersten Gehäusehälfte anklebbar oder anklemmbar vorhanden ist. Vorteilhafterweise ist der Sitzbezug und/oder die Polsterung lösbar an der ersten Gehäusehälfte anordenbar. Vorstellbar ist auch, dass die erste Gehäusehälfte, insbesondere die Vorrichtung, unmittelbar einen Sitzbezug und/oder eine Polsterung aufweist oder bildet.

Vorteilhafterweise ist die Vorrichtung an Stelle eines Polsters der Beinauflage an die Beinauflage angeordnet. Beispielsweise ist die Vorrichtung neben einem Polster angeordnet. Erfindungsgemäß ist die Vorrichtung zwischen Polstern der Beinauflage an der Beinauflage angeordnet. Vorteilhafterweise umfasst die Beinauflage zusätzlich zur Vorrichtung und beispielswiese zusätzlich zur an der Vorrichtung angeordneten Polsterelementen weitere Polsterelemente. Vorteilhafterweise bilden die weiteren Polsterelemente zusammen mit den an der Vorrichtung vorhandenen Polsterelementen eine Polsterung der Beinauflage.

Weiter wird vorgeschlagen, dass die beiden Gehäusehälften unlösbar und schwenkbeweglich miteinander verbunden sind. Hierdurch ist im Notfall, wenn ein Nutzer auf die Schwimmweste zugreifen muss, eine Öffnung der Vorrichtung zuverlässig und sicher realisierbar. Ebenfalls ist hierdurch eine vergleichsweise sichere Unterbringung der Schwimmweste in der Vorrichtung realisierbar, bei welcher die Schwimmweste, z.B. gegenüber unerlaubtem Zugriff, vergleichsweise sicher geschützt ist.

Bevorzugterweise sind die beiden Gehäusehälften über einen Schwenkmechanismus beweglich verbunden. Zum Beispiel umfasst der Schwenkmechanismus eine Federvorrichtung. Vorteilhafterweise umfasst die Federvorrichtung ein Federelement, insbesondere zwei Federelemente. Beispielsweise ist ein Federelement als eine Feder, z.B. als eine Schenkelfeder und/oder als eine Schraubenfeder vorhanden. Zum Beispiel umfasst der Schwenkmechanismus eine Achse mittels welcher der Schwenkmechanismus die beiden Gehäusehälften schwenkbeweglich miteinander verbindet. Beispielsweise umfasst der Schwenkmechanismus zwei Achsen, mittels welcher der Schwenkmechanismus die beiden Gehäusehälften schwenkbeweglich miteinander verbindet. Denkbar ist, dass das Federelement im Bereich der Achse ausgebildet ist. Vorstellbar ist weiterhin, dass das Federelement sich mit einem Ende an der ersten Gehäusehälfte und mit einem zweiten Ende z.B. an einer zweiten Gehäusehälfte der beiden Gehäusehälften abstützt, sodass die beiden Gehäusehälften in zumindest einer Relativposition zueinander durch eine Federkraft des Federelements kraftbeaufschlagt vorhanden sind. Denkbar ist auch, dass zusätzlich oder statt der Abstützung an der zweiten Gehäusehälfte das Federelement sich mit seinem zweiten Ende an der Grundstruktur abstützt.

Beispielsweise ist die erste Gehäusehälfte durch die Federkraft der Federvorrichtung aus einer geöffneten Position in Richtung der geschlossenen Position relativ zur zweiten Gehäusehälfte bewegbar. Denkbar ist auch, dass die erste Gehäusehälfte entgegen der Federkraft der Federvorrichtung aus der geöffneten Position in Richtung der geschlossenen Position relativ zur zweiten Gehäusehälfte bewegbar vorhanden ist. Beispielsweise ist eine Bewegung der ersten Gehäusehälfte relativ zur zweiten Gehäusehälfte aus einer geöffneten Position in Richtung der geschlossenen Position eine Schließbewegung in Schließrichtung. Zum Beispiel ist eine Bewegung der ersten Gehäusehälfte relativ zur zweiten Gehäusehälfte aus der geschlossenen Position in Richtung einer geöffneten Position eine Öffnungsbewegung in Öffnungsrichtung.

Vorteilhafterweise existiert eine einzige geschlossene Position der beiden Gehäusehälften relativ zueinander. Beispielsweise sind die beiden Gehäusehälften in der geschlossenen Position um eine Schwenkachse, in eine Schließrichtung, maximal aufeinander zugeschwenkt oder zugedreht vorhanden. Denkbar ist auch, dass eine erste geschlossene Position existiert, in welcher die beiden Gehäusehälften aufeinander zubewegt vorhanden und mittels einer Verschlussmechanik in der ersten geschlossenen Position relativ zueinander festlegbar sind. Vorstellbar ist weiterhin, dass eine zweite geschlossene Position existiert, wobei die erste Gehäusehälfte aus der ersten geschlossenen Position in Schließrichtung in die zweite geschlossene Position schwenkbar ist. Hierdurch ist beispielsweise ein Touch-Latch-Mechanismus zum Öffnen des Gehäuses realisierbar.

Bevorzugterweise ist die Federvorrichtung im Bereich des Schwenklagers vorhanden. Denkbar ist, dass die Federvorrichtung am Schwenklager ausgebildet ist. Beispielsweise umschließt ein Federelement die Schwenklagerachse des Schwenklagers. Vorstellbar ist weiterhin, dass das Federelement sich mit einem ersten Ende an der ersten Gehäusehälfte und mit einem zweiten Ende z.B. an der zweiten Gehäusehälfte abstützt, sodass die beiden Gehäusehälften in zumindest einer Relativposition zueinander durch eine Federkraft des Federelements kraftbeaufschlagt vorhanden sind. Denkbar ist auch, dass zusätzlich oder statt der Abstützung an der zweiten Gehäusehälfte das Federelement sich mit seinem zweiten Ende an der Grundstruktur abstützt. Beispielsweise stützt sich das Federelement mit dem ersten Ende am Hauptseitenelement und/oder an einem Seitenelement der ersten Gehäusehälfte und mit dem zweiten Ende am Hauptseitenelement der zweiten Gehäusehälfte und/oder an einem Seitenelement der zweiten Gehäusehälfte und/oder an der Grundstruktur der Beinauflage ab. Vorteilhafterweise ist das Federelement mit seinem ersten Ende mit dem Hauptseitenelement und/oder mit einem Seitenelement der ersten Gehäusehälfte positionsfest verbunden. Zum Beispiel ist das Federelement mit seinem zweiten Ende mit dem Hauptseitenelement der zweiten Gehäusehälfte und/oder mit dem Seitenelement der zweiten Gehäusehälfte und/oder mit der Grundstruktur der Beinauflage positionsfest verbunden. Beispielsweise ist ein Ende des Federelements an einem der vorangegangenen Elemente der Vorrichtung eingehängt und/oder angeklemmt und/oder angeschweißt und/oder angeklebt vorhanden.

Bevorzugterweise existieren eine Vielzahl von geöffneten Positionen der beiden Gehäusehälften zueinander. Insbesondere existiert eine einzige geöffnete Position, die maximal geöffnete Position, in welcher die beiden Gehäusehälften maximal voneinander weggeschwenkt vorhanden sind. Beispielsweise umfasst die Vorrichtung ein Anschlagsorgan, an welchem eine der beiden Gehäusehälften, insbesondere die erste Gehäusehälfte in der maximal geöffneten Position ansteht.

Vorteilhafterweise ist ein Öffnungsbereich definierbar, welcher ausgehend von der geschlossenen Position einen Schwenkzustand der ersten Gehäusehälfte relativ zur zweiten Gehäusehälfte in Öffnungsrichtung definiert. In der geschlossenen Position ist der Öffnungsbereich vorteilhafterweise 0° und nimmt in Öffnungsrichtung einen positiven Wert an. Beispielsweise ist die erste Gehäusehälfte relativ zur zweiten Gehäusehälfte ausgehend von der geschlossenen Position in Öffnungsrichtung um einen Öffnungsbereich oder um einen Winkelbereich von bis zu 45° oder 50° schwenkbar, z.B. bis zu der maximal geöffneten Position. Vorstellbar ist, dass die erste oder die zweite geöffnete Position als ein Bereich ausgebildet ist, in welchen die erste Gehäusehälfte relativ zur zweiten Gehäusehälfte schwenkbar ist.

Bevorzugterweise ist die erste Gehäusehälfte in der ersten geöffneten Position in einem Öffnungsbereich von 15° bis 30° aus der geschlossenen Position relativ zur zweiten Gehäusehälfte weggeschwenkt vorhanden. Denkbar ist, dass die erste Gehäusehälfte in der ersten geöffneten Position in einem Öffnungsbereich von 15° bis 25°, in einem Öffnungsbereich von 15° bis 20° oder in einem Öffnungsbereich von 20° bis 25° aus der geschlossenen Position relativ zur zweiten Gehäusehälfte weggeschwenkt vorhanden ist. Beispielsweise ist die erste Gehäusehälfte in der ersten geöffneten Position um einen Winkelbereich von 15°, 20°, 25° oder 30° relativ zur zweiten Gehäusehälfte von der geschlossenen Position weggeschwenkt vorhanden.

Vorteilhafterweise ist die erste Gehäusehälfte in der zweiten geöffnete Position in einem Öffnungsbereich von 30° bis 50° aus der geschlossenen Position relativ zur zweiten Gehäusehälfte weggeschwenkt vorhanden. Denkbar ist, dass die erste Gehäusehälfte in der zweiten geöffneten Position in einem Öffnungsbereich von 30° bis 45°, in einem Öffnungsbereich von 30° bis 40°, in einem Öffnungsbereich von 35° bis 45° oder in einem Öffnungsbereich von 35° bis 40° aus der geschlossenen Position relativ zur zweiten Gehäusehälfte weggeschwenkt vorhanden ist. Beispielsweise ist die erste Gehäusehälfte in der zweiten geöffneten Position um einen Winkelbereich von 30°, 35°, 40°, 45° oder 50° relativ zur zweiten Gehäusehälfte von der geschlossenen Position weggeschwenkt vorhanden.

Erfindungsgemäß weist jede Gehäusehälfte ein Hauptseitenelement auf, wobei an jedem der Hauptseitenelemente quer dazu abstehende Seitenelemente vorhanden sind, wobei zwei Seitenelemente einer Gehäusehälfte voneinander beabstandet und gegenüberliegend ausgebildet sind,
wobei ein Abstand von den zwei beabstandeten und gegenüberliegenden Seitenelementen einer ersten der Gehäusehälften größer ist, als ein Abstand von den zwei beabstandeten und gegenüberliegenden Seitenelementen einer zweiten der Gehäusehälften, sodass in einer geschlossenen Position des Gehäuses, die Seitenelemente der ersten und der zweiten Gehäusehälfte überlappend vorhanden sind. Hierdurch ist in der geschlossenen Position des Gehäuses die Schwimmweste vorteilhafterweise unzugänglich im Inneren des Gehäuses anordenbar. Beispielsweise ist das Gehäuse hierdurch vergleichsweise stabil ausgebildet, sodass in der geschlossenen Position des Gehäuses kein Gegenstand in das Gehäuse einbringbar ist. Bevorzugterweise umschließen die beiden Gehäusehälften in der geschlossenen Position das Innere des Gehäuses. Vorteilhafterweise bilden die beiden Gehäusehälften in der geschlossenen Position im Inneren einen Hohlraum. Vorteilhafterweise ist im Hohlraum des Gehäuses die Schwimmweste unterbringbar. Beispielsweise umschließen die Hauptseitenelemente und die Seitenelemente der Gehäusehälften in der geschlossenen Position das Innere, insbesondere den Hohlraum. Vorteilhafterweise umschließen die Hauptseitenelemente und die Seitenelemente der Gehäusehälften in der geschlossenen Position das Innere, insbesondere den Hohlraum vollständig.

Vorteilhafterweise sind an jeder Gehäusehälfte vier Seitenelemente vorhanden. Beispielsweise sind die Seitenelemente rechteckförmig angeordnet. Vorteilhafterweise sind jeweils zwei Seitenelemente einer Gehäusehälfte beispielsweise unmittelbar miteinander verbunden. Vorteilhafterweise ist jede Gehäusehälfte in Form einer Halbschale oder halbschalenförmig vorhanden. Beispielsweise ist eine Gehäusehälfte einstückig ausgebildet. Erfindungsgemäß ist das Hauptseitenelement der zweiten Gehäusehälfte insbesondere unmittelbar anliegend an der Grundstruktur der Beinauflage vorhanden oder die Grundstruktur der Beinauflage bildet das Hauptseitenelement der zweiten Gehäusehälfte. Beispielsweise ist die zweite Gehäusehälfte, insbesondere das Hauptseitenelement der zweiten Gehäusehälfte, mit der Grundstruktur vernietet, verschweißt, verlötet oder verklebt.

Eine vorteilhafte Modifikation der Erfindung ist, dass die erste Gehäusehälfte eine Durchgangsöffnung aufweist, sodass ein Sichtelement von einem Inneren des Gehäuses durch die Durchgangsöffnung nach außen bringbar ist. Hierdurch ist das Sichtelement für einen Betrachter von außen, z.B. ohne Öffnen des Gehäuses, sichtbar vorhanden. Denkbar ist beispielsweise, dass hierdurch eine Haltbarkeit einer im Inneren des Gehäuses untergebrachten Schwimmweste ohne Öffnen des Gehäuses für einen Betrachter von außen sichtbar oder erkennbar ist. Beispielsweise ist die Durchgangsöffnung am Hauptseitenelement der ersten Gehäusehälfte ausgebildet.

Vorteilhafterweise umfasst das Sichtelement eine Information. Beispielsweise ist die Information als eine Farbmarkierung, z.B. als eine Farbe ausgebildet, welche das Sichtelement aufweist. Denkbar ist jedoch auch, dass das Sichtelement eine Information in Form eines Aufdrucks und/oder eines Aufklebers aufweist. Die Information umfasst beispielsweise ein Datum, z.B. ein Datum auf dem Aufdruck und/oder auf dem Aufkleber. Vorstellbar ist weiter, dass die Information in Form eines Strichcodes und/oder eines Barcodes vorhanden ist.

Bevorzugterweise ist das Sichtelement Bestandteil eines im Inneren der Vorrichtung oder im Inneren des Gehäuses unterbringbaren Gegenstands, z.B. der Schwimmweste. Vorteilhafterweise ist das Sichtelement unlösbar mit dem Gegenstand, z.B. der Schwimmweste, und/oder einer Verpackung des Gegenstands verbunden. Beispielsweise ist das Sichtelement als ein Etikett ausgebildet.

Vorteilhafterweise umfasst die Vorrichtung ein Fixierungsorgan, um das Sichtelement im durchgeführten Zustand an der Durchgangsöffnung am Gehäuse festzulegen. Die Durchgangsöffnung ist beispielsweise als ein Schlitz ausgebildet. Vorstellbar ist auch, dass durch die Durchgangsöffnung ein Auslöseband bzw. ein Zugband einer Verschlussmechanik des Gehäuses nach außen bringbar ist.

Auch ist es von Vorteil, dass die Vorrichtung eine Informationseinrichtung aufweist, wobei an die Informationseinrichtung eine Information über das im Inneren des Gehäuses der Vorrichtung Befindliche anbringbar ist. Beispielsweise ist das Sichtelement an der Informationseinrichtung anbringbar. Z.B. umfasst die Informationseinrichtung das Fixierungsorgan. Beispielsweise ist die Informationseinrichtung als ein Sichtfenster ausgebildet. Vorteilhafterweise ist die Informationseinrichtung an der ersten Gehäusehälfte ausgebildet. Z.B. ist die Informationseinrichtung am Hauptseitenelement der ersten Gehäusehälfte ausgebildet. Vorteilhafterweise ist die Informationseinrichtung gegenüberliegend zum Inneren des Gehäuses an der Außenseite der ersten Gehäusehälfte ausgebildet. Beispielsweise ist eine Außenseite der Informationseinrichtung im angeordneten Zustand der Polsterung der Beinauflage bündig mit der Nutzfläche der Polsterung der Beinauflage vorhanden.

Außerdem wird vorgeschlagen, dass die Vorrichtung eine Siegeleinrichtung aufweist, sodass an die Vorrichtung ein Siegel anbringbar ist. Hierdurch ist ein Zugriff auf das Innere des Gehäuses der Vorrichtung erkennbar.

Vorteilhafterweise ist in der geschlossenen Position des Gehäuses das Siegel an die Vorrichtung anbringbar. Beispielsweise ist hierdurch das Gehäuse in der geschlossenen Position versiegelbar. Zum Beispiel ist das Gehäuse in einer Weise ausgebildet, dass im angeordneten Zustand des Siegels, durch Bewegen der beiden Gehäusehälften relativ zueinander aus der geschlossenen Position der Gehäusehälften in eine geöffnete Position der Gehäusehälften das Siegel zerstört wird.

Vorteilhafterweise umfasst die Siegeleinrichtung zwei Sicherungselemente, welche durch ein Siegel in der geschlossenen Position des Gehäuses miteinander verbindbar sind. Ein Sicherungselement umfasst beispielsweise eine Öse. Beispielsweise sind die Sicherungselemente fahnenartig abstehend am Gehäuse oder an der Beinauflage anordenbar. Denkbar ist, dass ein Sicherungselement an der ersten Gehäusehälfte und ein zweites Sicherungselement an der zweiten Gehäusehälfte vorhanden ist. Vorstellbar ist auch, dass das zweite Sicherungselement statt an der zweiten Gehäusehälfte an der Grundstruktur der Beinauflage angeordnet ist. Beispielsweise ist ein erstes der Sicherungselemente insbesondere unmittelbar an die erste Gehäusehälfte insbesondere unlösbar angeordnet, z.B. angeklebt, angeschraubt und/oder angenietet. Vorteilhafterweise umfasst die Vorrichtung das Siegel. Von Vorteil erweist sich auch, dass ein zweites der Sicherungselemente der Siegeleinrichtung unmittelbar an die Grundstruktur der Beinauflage angeordnet ist. Beispielsweise ist das zweite Sicherungselement unlösbar an der Grundstruktur angeordnet, z.B. angeklebt, angeschraubt und/oder angenietet.

Eine vorteilhafte Modifikation der Erfindung ist, dass die Vorrichtung eine Verschlussmechanik aufweist, wobei die Verschlussmechanik die beiden Gehäusehälften in der geschlossenen Position zueinander festlegt, wobei die Verschlussmechanik ein Zugelement umfasst, wobei die Verschlussmechanik derart ausgebildet ist, dass durch Ziehen am Zugelement Teile der Verschlussmechanik derart bewegbar sind, dass die beiden Gehäusehälften im Bereich der Verschlussmechanik voneinander gelöst sind. Durch Ziehen am Zugelement ist ein Bewegen der ersten Gehäusehälfte relativ zur zweiten Gehäusehälfte von der geschlossenen Position in-eine geöffnete Position freigegeben.

Beispielsweise ist das Zugelement flexibel vorhanden. Denkbar ist, dass das Zugelement als eine Leine oder als ein Band vorhanden ist. Z.B. ist das Zugelement als ein Stoffband oder als ein Kunststoffband ausgebildet. Beispielsweise ist das Zugelement durch die Durchgangsöffnung durchgeführt vorhanden.

Vorteilhafterweise umfasst die erste Gehäusehälfte eine Aussparung in welcher die Durchgangsöffnung, ein Sicherungselement und/oder die Informationseinrichtung vorhanden ist. Denkbar ist, dass die Informationseinrichtung die Aussparung umfasst. Bevorzugterweise ist das Zugelement in der Aussparung vertieft zur Nutzfläche der Polsterung der Beinauflage, anschließend an die Nutzfläche der Polsterung der Beinauflage und/oder bündig mit der Nutzfläche der Polsterung der Beinauflage angeordnet. Vorstellbar ist auch, dass die Aussparung eine Haltevorrichtung umfasst, um das Zugelement insbesondere vergleichsweise einfach und sicher lösbar in der Aussparung festzulegen. Die Haltevorrichtung ist beispielsweise als ein Haken- und Ösenband, z.B. als ein Klettband vorhanden. Denkbar ist jedoch auch, dass die Haltevorrichtung ein Klebeelement umfasst, mittels welchem das Zugelement insbesondere vergleichsweise leicht lösbar an die Aussparung gefügt ist. Vorteilhafterweise ist das Zugelement derart ausgebildet, z.B. vergleichsweise starr ausgebildet, dass das Zugelement bei einer herkömmlichen Benutzung der Beinauflage, insbesondere bei einer herkömmlichen Benutzung des Fluggastsitzes, in seiner Position in der Aussparung verbleibt.

Außerdem erweist es sich von Vorteil, dass das Hauptseitenelement der zweiten Gehäusehälfte ein integraler Bestandteil der Grundstruktur der Beinauflage ist. Hierdurch ist eine Herstellung und/oder Montage der Beinauflage vereinfacht. Vorteilhafterweise ist die Vorrichtung unmittelbar an der Grundstruktur der Beinauflage angeordnet. Beispielsweise ist die Vorrichtung oder sind Teile der Vorrichtung integraler Bestandteil der Grundstruktur der Beinauflage.

Vorteilhafterweise sind die Seitenelemente der zweiten Gehäusehälfte im angeordneten Zustand der Vorrichtung insbesondere unmittelbar an die Grundstruktur der Beinauflage angeordnet. Beispielsweise sind die Seitenelemente der zweiten Gehäusehälfte unlösbar mit der Grundstruktur verbunden, z.B. integral mit der Grundstruktur vorhanden. Denkbar ist auch, dass die Seitenelemente der zweiten Gehäusehälfte an die Grundstruktur angeklebt, angeschraubt und/oder angenietet vorhanden sind.

Eine vorteilhafte Ausführungsform der Erfindung ist ein Fluggastsitz mit einer Beinauflage nach einem der vorangegangen genannten Varianten. Vorteilhafterweise ist die Beinauflage schwenkbeweglich am Fluggastsitz vorhanden.

Eine weitere vorteilhafte Modifikation der Erfindung ist eine Sitzreihe mit mindestens zwei Fluggastsitzen wie vorangegangen genannt.

Eine weitere vorteilhafte Ausführungsform der Erfindung ist ein Flugzeug mit einem Fluggastsitz oder mit einer Sitzreihe oder mit einer Beinauflage nach einem der vorangegangen genannten Varianten.

### Figurenbeschreibung

Ein Ausführungsbeispiel wird anhand der nachstehenden schematischen Zeichnungen unter Angabe von weiteren Einzelheiten und Vorteilen näher erläutert.

Es zeigen:
- Figur 1: in einer perspektivischen Ansicht von schräg vorne oben eine Sitzreihe mit zwei Fluggastsitzen jeweils umfassend einen Sitzboden, eine Rückenlehne samt rückseitiger Umhausung und eine Beinauflage,
- Figuren 2 bis 5: in unterschiedlichen perspektivischen Ansichten von schräg vorne oben eine weitere Sitzreihe mit zwei Fluggastsitzen mit einer erfindungsgemäßen Beinauflage in verschiedenen Beinauflagepositionen,
- Figuren 6 bis 9: in unterschiedlichen perspektivischen Ansichten von schräg vorne eine Beinauflage, wobei eine erste Gehäusehälfte einer Vorrichtung der Beinauflage sich in verschiedenen Zuständen relativ zu einer zweiten Gehäusehälfte befindet,
- Figur 10: eine perspektivische Ansicht von schräg vorne auf die Beinauflage gemäß Figur 6, wobei seitliche Polster der Beinauflage unsichtbar gehalten sind,
- Figur 11: eine perspektivische Ansicht von schräg vorne auf die Beinauflage gemäß Figur 10, wobei zusätzlich die erste Gehäusehälfte mit Polster unsichtbar gehalten ist und
- Figur 12: eine perspektivische Ansicht von schräg seitlich unten auf die Vorrichtung der Beinauflage gemäß Figur 10, wobei die Grundstruktur der Beinauflage und seitliche Polsterungen der Vorrichtung unsichtbar gehalten sind.

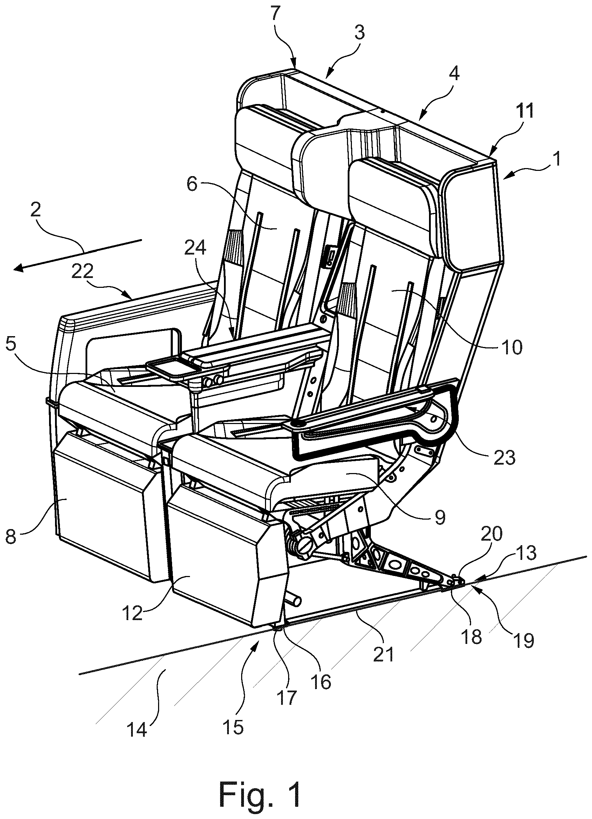

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare oder schwenkbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Beispielsweise sind die Fluggastsitze 3 und 4 über zwei Stützbeine 13 (nur einer sichtbar) an einem Kabinenboden 14 einer Flugkabine eines dazugehörigen Flugzeuges (nicht gezeigt) montierbar. Das Stützbein 13 weist hierfür an einem unteren Endbereich 15 einer vorderen Strebe 16 eine Montagestelle 17 und eine weitere Montagestelle 18 an einem unteren Endbereich 19 einer hinteren Strebe 20 auf. Zwischen den Endbereichen 15 und 19 ist ein Verstrebungselement 21 vorgesehen.

Bevorzugterweise weist die Sitzreihe 1 zudem eine äußere Armlehne 22 seitlich am Fluggastsitz 3 und eine äußere Armlehne 23 seitlich am Fluggastsitz 4 auf. Zwischen den beiden Fluggastsitzen 3 und 4 ist vorzugsweise auf Höhe der beiden äußeren Armlehnen 22 und 23 eine Konsole 24 vorhanden, welche von einem Fluggast ebenfalls als Armauflage genutzt werden kann.

Vorteilhafterweise ist in einer Schalenform der jeweiligen Umhausung 7 bzw. 11 die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

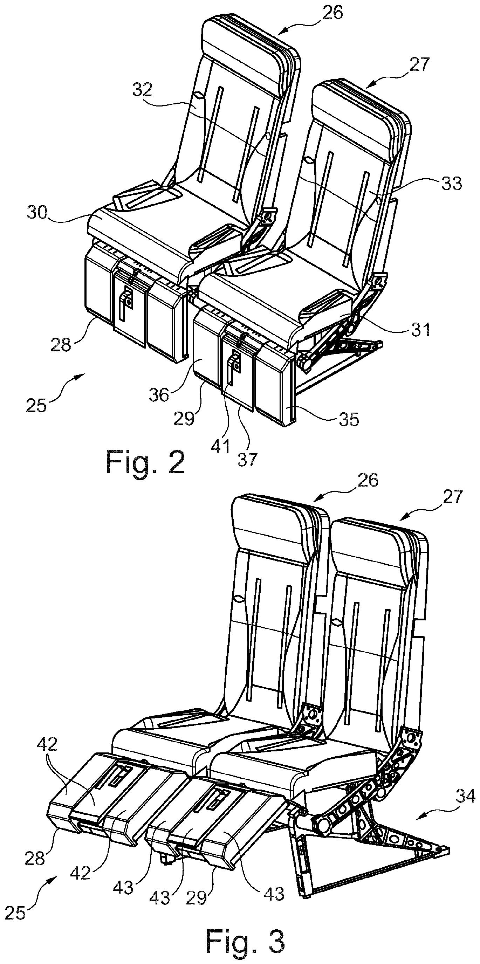

Bevorzugterweise umfassen die in der Figur 1 gezeigten Fluggastsitze 3, 4 die in den folgenden Figuren 2 bis 12 gezeigten und untenstehend beschriebenen Beinauflagen mit Vorrichtung.

In den Figuren 2 bis 4 ist eine weitere Sitzreihe 25 mit Fluggastsitzen 26, 27 gezeigt. Vorteilhafterweise entspricht die Sitzreihe 25 der Sitzreihe 1, wobei die Fluggastsitze 26, 27 der Sitzreihe 25 sich beispielsweise ausschließlich in einer unterschiedlichen Ausgestaltung der Beinauflagen 28, 29 der Fluggastsitze 26, 27 von den Fluggastsitzen 3, 4 der Sitzreihe 1 unterscheiden. Beispielsweise ist in den Figuren 2 bis 4 entsprechend bei der Sitzreihe 25 gegenüber der Sitzreihe 1 die Umhausung sowie die Armlehnen und die Konsole unsichtbar gehalten.

Vorteilhafterweise umfassen die Fluggastsitze 26, 27 der Sitzreihe 25 jeweils eine Beinauflagen 28, 29, einen Sitzboden 30, 31, eine Rückenlehne 32, 33, sowie Stützbeine 34 (nur eine Stützbein in den Figuren gezeigt).

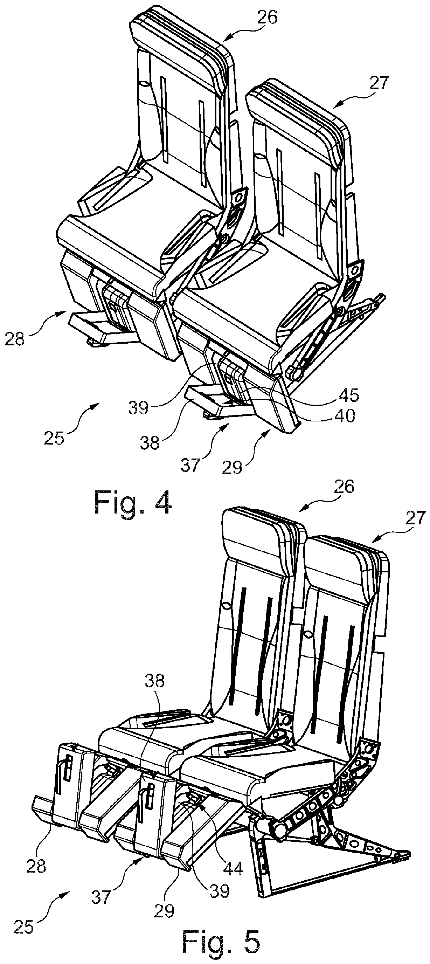

Vorteilhafterweise sind die Beinauflagen 28, 29 identisch aufgebaut, weshalb der Aufbau der Beinauflagen 28, 29 im Folgenden exemplarisch an der Beinauflage 29 beschrieben wird:
Die Beinauflage 29 umfasst vorteilhafterweise unter anderem ein erstes seitliches Polster 35 und ein zweites seitliches Polster 36, sowie eine Vorrichtung 37. Die Vorrichtung 37 umfasst eine erste Gehäusehälfte 38 und eine zweite Gehäusehälfte 39 (siehe auch Figur 5).

In den Figuren 2 bis 5 sind die Beinauflagen 28, 29 in unterschiedlichen Zuständen an den Fluggastsitzen 26, 27 gezeigt. In Figur 2 sind die Beinauflagen 28, 29 in einem eingeklappten Beinauflagezustand an den Fluggastsitzen 26, 27 gezeigt. Im eingeklappten Beinauflagezustand der Beinauflagen 28, 29 befinden sich die Fluggastsitze 26, 27 in einem aufrechten Nutzzustand. In Figur 3 sind die Beinauflagen 28, 29 in einem ausgeklappten Beinauflagezustand an den Fluggastsitzen 26, 27 gezeigt. Im ausgeklappten Beinauflagezustand der Beinauflagen 28, 29 befinden sich die Fluggastsitze 26, 27 in einem Liegezustand. Im Liegezustand kann ein Nutzer einer der Fluggastsitze 26, 27 seine Beine auf eine Nutzfläche 42, 43 der Beinauflagen 28, 29 auflegen oder anlegen.

In Figur 4 ist die Beinauflage 29 im eingeklappten Beinauflagezustand am Fluggastsitz 27 dargestellt und in Figur 5 ist die Beinauflage 29 im ausklappten Beinauflagezustand am Fluggastsitz 27 dargestellt, wobei jeweils die erste Gehäusehälfte 38 der Vorrichtung 37 in eine geöffnete Position relativ zur zweiten Gehäusehälfte 39 vorhanden ist. Gezeigt ist außerdem, dass in einem inneren Hohlraum 44 der Vorrichtung 37 eine Schwimmweste 45 angeordnet ist.

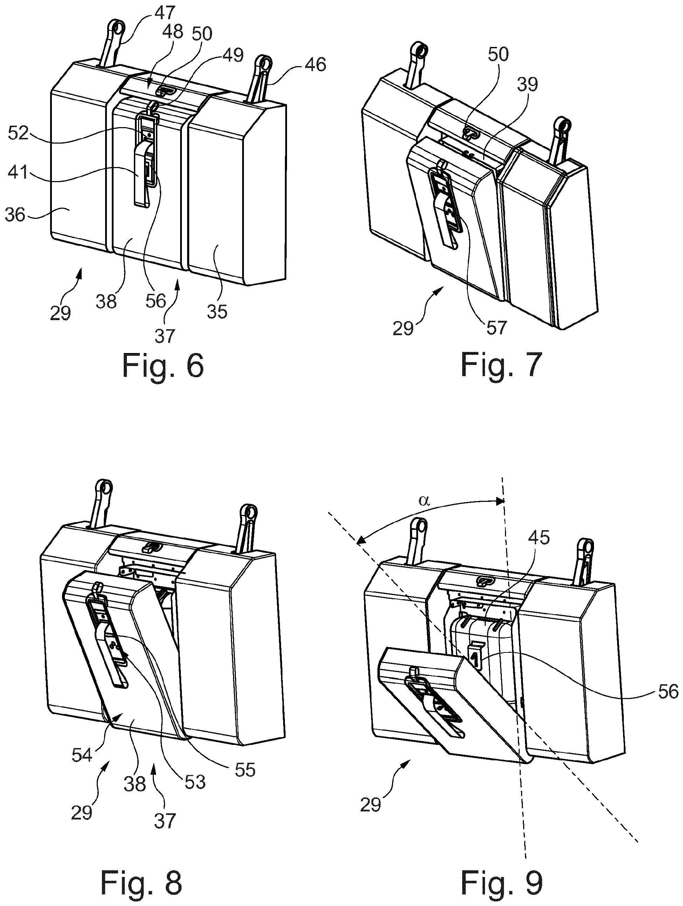

In den Figuren 6 bis 9 ist die Beinauflage 29 des Fluggastsitz 27 in unterschiedlichen perspektivischen Ansichten gezeigt.

In Figur 6 ist die Beinauflage 29 gezeigt, welche die Vorrichtung 37, mit der ersten Gehäusehälfte 38 und der zweiten Gehäusehälfte 39 umfasst. Weiter umfasst die Beinauflage 29 die Polster 35, 36 sowie zwei Anbindungsorgane 46, 47, mittels welchen die Beinauflage 29 schwenkbeweglich am verbleibenden Fluggastsitz 27 anordenbar ist. Vorteilhafterweise umfasst die Vorrichtung 37 an der ersten Gehäusehälfte 38 ein Zugelement einer Verschlussmechanik 40, beispielsweise in Form einer Lasche 41. Beispielsweise umfasst die erste Gehäusehälfte 38 eine Durchgangsöffnung in Form eines Schlitz 52. Vorteilhafterweise ist die Lasche 41 ausgehend von einer Rückseite der ersten Gehäusehälfte 38, welche den Hohlraum 44 begrenzt, durch den Schlitz 52 hindurchgeführt vorhanden. Hierdurch kann ein Nutzer durch ziehen an der Lasche 41 die Verschlussmechanik 40 auslösen, insbesondere öffnen.

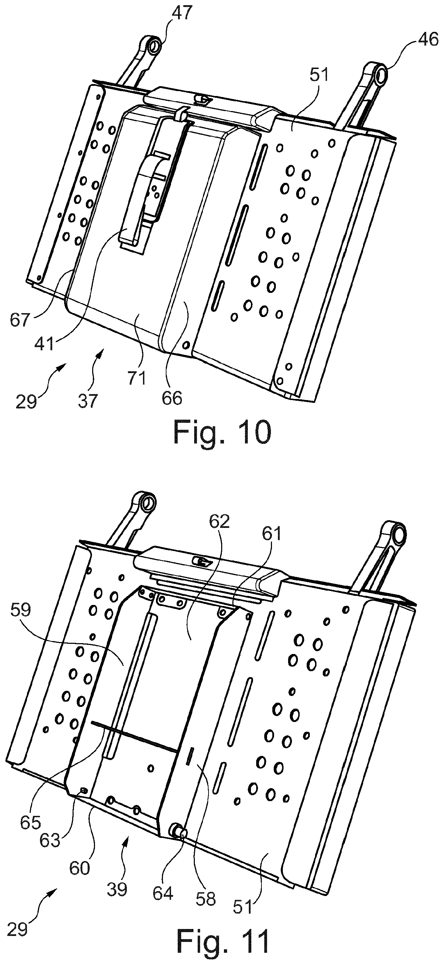

Bevorzugterweise ist an der Vorrichtung 37 außerdem eine Siegeleinrichtung 48 vorhanden. Vorteilhafterweise weist die Siegeleinrichtung 48 eine erste Öse 49 und eine zweite Öse 50 auf, welche in der geschlossenen Position der Gehäusehälften 38, 39, wie in Figur 6 gezeigt, mit einem Siegel (nicht dargestellt) verbindbar sind. Vorteilhafterweise ist die erste Öse 49 an der ersten Gehäusehälfte 38 befestigt. Beispielsweise ist die zweite Öse 50 an der Beinauflage 29 befestigt, insbesondere einer Grundstruktur 51 der Beinauflage 29 (siehe auch Figuren 10, 11).

Vorteilhafterweise umfasst die Vorrichtung 37 eine Informationseinrichtung in Form einer Aussparung 53. Beispielsweise ist die Aussparung 53 an einer Außenseite 54 der ersten Gehäusehälfte 38 ausgebildet. Zum Beispiel ist die Aussparung 53 zurückversetzt an der Außenseite 54 vorhanden, insbesondere in Richtung des Hohlraums 44 bzw. in Richtung der zweiten Gehäusehälfte 39. Vorteilhafterweise ist die Aussparung 53 zurückversetzt zur Nutzfläche 43 an der ersten Gehäusehälfte 38 ausgebildet. Vorteilhaft ist weiterhin, dass die Informationseinrichtung eine zweite Durchgangsöffnung in Form eines zweiten Schlitz 55 aufweist. Beispielsweise ist durch den zweiten Schlitz 55 ein Sichtelement 56 der Schwimmweste 45 hindurchführbar, sodass in der geschlossenen Position der ersten Gehäusehälfte 38 relativ zur zweiten Gehäusehälfte 39 das Sichtelement 56 in der Aussparung 53 vorhanden ist. Beispielsweise umfasst die Informationseinrichtung ein Fixierungsorgan 57, um das Sichtelement 56 in der Aussparung 53 festzulegen.

Bevorzugterweise ist die erste Gehäusehälfte 38 relativ zur zweiten Gehäusehälfte 39 um einen Winkelbereich α von der geschlossenen Position in eine geöffnete Position schwenkbar vorhanden (siehe auch Figur 9) und/oder umgekehrt. In der geschlossenen Position der ersten Gehäusehälfte 38 relativ zur zweiten Gehäusehälfte 39 ist der Winkel α vorteilhafterweise 0°.

In Figur 10 ist die Beinauflage 29 gezeigt, wobei die Polster 35 und 36 unsichtbar gehalten sind. Ebenfalls ist in Figur 10 die Schwimmweste 45 nicht gezeigt. In Figur 10 gezeigt ist, dass die Beinauflage 29 die Grundstruktur 51 aufweist, an welcher die Anbindungsorgane 46, 47 befestigt sind. Die Grundstruktur 51 ist vorteilhafterweise plattenförmig ausgebildet, zum Beispiel als eine Metallplatte.

Figur 11 entspricht der Beinauflage 29 gemäß Figur 10, wobei in Figur 11 die erste Gehäusehälfte 38 unsichtbar gehalten ist. Gezeigt ist in Figur 11 die Grundstruktur 51 der Beinauflage 29, wobei an der Grundstruktur 51 die zweite Gehäusehälfte 39 befestigt ist. Die zweite Gehäusehälfte 39 umfasst zwei lange Seitenelemente 58, 59, sowie zwei kurze Seitenelemente 60, 61. Vorteilhafterweise sind die Seitenelemente 58 bis 61 an der Grundstruktur 51 unmittelbar befestigt, z.B. angeschraubt oder angenietet. Beispielsweise bildet die Grundstruktur 51 dabei ein Hauptseitenelement 62 der zweiten Gehäusehälfte 39. Beispielsweise sind an der zweiten Gehäusehälfte 39 zwei Schwenklagerachsen 63, 64 vorhanden. Mittels den Schwenklagerachsen 63, 64 ist beispielsweise die erste Gehäusehälfte 38 schwenkbar mit der zweiten Gehäusehälfte 39 verbindbar. Vorteilhafterweise ist eine Schwenklagerachse 63 an einem langen Seitenelement 59 ausgebildet und die andere Schwenklagerachse 64 am anderen langen Seitenelement 58. Beispielsweise umfasst die zweite Gehäusehälfte 39 ein Halteorgan in Form eines Querbügels 65, welcher sich zwischen den beiden langen Seitenelementen 58, 59 erstreckt und an diesen angeordnet ist. Mittels des Querbügels 65 ist vorteilhafterweise eine an die zweite Gehäusehälfte 39 angeordnete Schwimmweste an der zweiten Gehäusehälfte 39 gehalten und damit ein unbeabsichtigtes Herausfallen der Schwimmweste aus der Vorrichtung 37 verhindert.

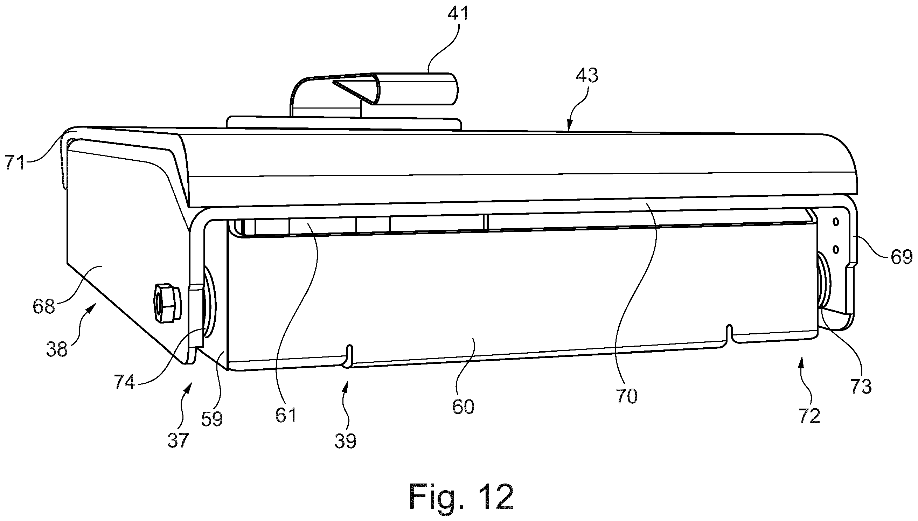

In Figur 12 ist die Vorrichtung 37 ohne verbleibende Teile der Beinauflage 29 dargestellt. Somit ist unter anderem die Grundstruktur 51 und damit das Hauptseitenelement 62 in Figur 12 nicht dargestellt. Ebenfalls nicht gezeigt sind seitliche Polsterelemente 66, 67 der ersten Gehäusehälfte 38 (siehe auch Figur 10). In Figur 12 gezeigt ist die zweite Gehäusehälfte 39 mit den kurzen Seitenelement 60 und dem langen Seitenelement 59. Weiter ist in Figur 12 die erste Gehäusehälfte 38 gezeigt, welche ein erstes langes Seitenelement 68 und ein zweites langes Seitenelement 69, sowie ein Hauptseitenelement 70 umfasst. Vorteilhafterweise sind die langen Seitenelemente 68, 69, sowie das Hauptseitenelement 70 der ersten Gehäusehälfte 38 einstückig vorhanden. Im angeordneten Zustand an der Beinauflage 29 sind an den langen Seitenelementen 68, 69 die Polsterelemente 66, 67 (siehe Figur 10) befestigt. Vorteilhafterweise ist am Hauptseitenelement 70 ein weiteres Polsterelement 71 befestigt.

Beispielsweise umfasst die Vorrichtung 37 eine Federvorrichtung 72, welche Federelemente 73 und 74 aufweist. Die Federelemente 73, 74 sind beispielsweise an den Schwenklagerachsen 63 bzw. 64 angeordnet. Vorteilhafterweise sind die Federelemente 73, 74 zwischen einem Seitenelement 58 bzw. 59 der zweiten Gehäusehälfte 39 und einem Seitenelement 68 bzw. 69 der ersten Gehäusehälfte 38 vorhanden. Beispielsweise ist die erste Gehäusehälfte 38 schwenkbeweglich an den langen Seitenelementen 58, 59 der zweiten Gehäusehälfte 39 angelenkt.

### Bezugszeichenliste

| | | | |
|---|---|---|---|
| 1 | Sitzreihe | 40 | Verschlussmechanik |
| 2 | Sitzrichtung | 41 | Lasche |
| 3 - 4 | Fluggastsitz | 42 - 43 | Nutzfläche, |
| 5, 9 | Sitzboden | 44 | Hohlraum |
| 6, 10 | Rückenlehne | 45 | Schwimmweste |
| 7 | Umhausung | 46 - 47 | Anbindungsorgan |
| 8 , 12 | Beinauflage | 48 | Siegeleinrichtung |
| 11 | Umhausung | 49 - 50 | Öse |
| 13 | Stützbein | 51 | Grundstruktur |
| 14 | Kabinenboden | 52 | Schlitz |
| 15, 19 | Endbereich | 53 | Aussparung |
| 16, 20 | Strebe | 54 | Außenseite |
| 17 - 18 | Montagestelle | 55 | Schlitz |
| 21 | Verstrebungselement | 56 | Sichtelement |
| 22 - 23 | Armlehne | 57 | Fixierungsorgan |
| 24 | Konsole | 58 - 61 | Seitenelement |
| 25 | Sitzreihe | 62 | Hauptseitenelement |
| 26 - 27 | Fluggastsitz | 63 - 64 | Schwenklagerachse |
| 28 - 29 | Beinauflage | 65 | Querbügel |
| 30 - 31 | Sitzboden | 66 - 67 | Polsterelement |
| 32 - 33 | Rückenlehne | 68 - 69 | Seitenelement |
| 34 | Stützbein | 70 | Hauptseitenelement |
| 35 - 36 | Polster | 71 | Polsterelement |
| 37 | Vorrichtung | 72 | Federvorrichtung |
| 38 - 39 | Gehäusehälfte | 73 - 74 | Federelement |

## Patentansprüche

1. Beinauflage (29) eines Fluggastsitzes (27) mit einer Vorrichtung (37), wobei die Vorrichtung (37) ein Gehäuse umfasst, wobei das Gehäuse zwei Gehäusehälften (38, 39) aufweist, wobei die beiden Gehäusehälften (38, 39) schwenkbeweglich miteinander verbunden sind, wobei die Vorrichtung zwischen Polstern der Beinauflage an der Beinauflage angeordnet ist, wobei das Gehäuse derart ausgebildet ist, dass eine Schwimmweste (45) für einen Fluggast darin verstaubar ist, wobei an einer ersten Gehäusehälte (38) der beiden Gehäusehälften (38, 39) ein Sitzbezug des Fluggastsitzes (27) angeordnet ist, sodass die Vorrichtung (37) einen Teil einer Nutzfläche (43) der Beinauflage (29) bildet, wobei die Vorrichtung (37) an einer Grundstruktur (51) der Beinauflage (29) angeordnet ist, wobei die beiden Gehäusehälften aus Metall und/oder aus einem stabilen Kunststoff ausgebildet sind, wobei jede Gehäusehälfte ein Hauptseitenelement aufweist, wobei an jedem der Hauptseitenelemente quer dazu abstehende Seitenelemente vorhanden sind, wobei zwei Seitenelemente einer Gehäusehälfte voneinander beabstandet und gegenüberliegend ausgebildet sind, wobei ein Abstand von den zwei beabstandeten und gegenüberliegenden Seitenelementen der ersten der beiden Gehäusehälften (38, 39) größer ist, als ein Abstand von den zwei beabstandeten und gegenüberliegenden Seitenelementen einer zweiten der beiden Gehäusehälften (38, 39), sodass in einer geschlossenen Position des Gehäuses, die Seitenelemente der ersten und der zweiten Gehäusehälfte (38, 39) überlappend vorhanden sind, wobei das Hauptseitenelement der zweite Gehäusehälfte (39) unmittelbar anliegend an der Grundstruktur vorhanden ist oder die Grundstruktur das Hauptseitenelement der zweiten Gehäusehälfte (39) bildet.

2. Beinauflage (29) nach dem vorangegangenen Anspruch 1, **dadurch gekennzeichnet, dass** die zweite Gehäusehälfte (39) ein Halteorgan in Form eines Querbügels (65) umfasst, welcher sich zwischen zwei langen Seitenelementen (58, 59) der zweiten Gehäusehälfte (39) erstreckt und an diesen angeordnet ist, wodurch im angeordneten Zustand an der zweiten Gehäusehälfte (39) die Schwimmweste an der zweiten Gehäusehälfte (39) gehalten ist und damit ein unbeabsichtigtes Herausfallen der Schwimmweste aus der Vorrichtung verhindert ist

3. Beinauflage (29) nach einem der vorangegangenen Ansprüche,
**dadurch gekennzeichnet, dass** die beiden Gehäusehälften (38, 39) unlösbar und schwenkbeweglich miteinander verbunden sind.

4. Beinauflage (29) nach einem der vorangegangenen Ansprüche,
**dadurch gekennzeichnet, dass** die erste Gehäusehälfte (38) eine Durchgangsöffnung (55) aufweist, sodass ein Sichtelement (56) von einem Inneren (44) des Gehäuses durch die Durchgangsöffnung (55) nach außen bringbar ist.

5. Beinauflage (29) nach einem der vorangegangenen Ansprüche,
**dadurch gekennzeichnet, dass** die Vorrichtung (37) eine Informationseinrichtung (53) aufweist, wobei an die Informationseinrichtung (53) eine Information über das im Inneren (44) des Gehäuses der Vorrichtung (37) Befindliche (45) anbringbar ist.

6. Beinauflage (29) nach einem der vorangegangenen Ansprüche,
**dadurch gekennzeichnet, dass** die Vorrichtung (37) eine Siegeleinrichtung (48) aufweist, sodass an die Vorrichtung (37) ein Siegel anbringbar ist.

7. Beinauflage (29) nach einem der vorangegangenen Ansprüche,
**dadurch gekennzeichnet, dass** die Vorrichtung (37) eine Verschlussmechanik (40) aufweist, wobei die Verschlussmechanik (40) die beiden Gehäusehälften (38, 39) in der geschlossenen Position zueinander festlegt, wobei die Verschlussmechanik (40) ein Zugelement (41) umfasst, wobei die Verschlussmechanik (40) derart ausgebildet ist, dass durch Ziehen am Zugelement (41) Teile der Verschlussmechanik (40) derart bewegbar sind, dass die Gehäusehälften (38, 39) im Bereich der Verschlussmechanik (40) voneinander gelöst sind.

8. Beinauflage (29) nach einem der vorangegangenen Ansprüche, **dadurch gekennzeichnet, dass** das Hauptseitenelement (62) der zweiten Gehäusehälfte (39) ein integraler Bestandteil der Grundstruktur (51) der Beinauflage (29) ist.

9. Fluggastsitz (27) mit einer Beinauflage (29) nach einem der vorangegangenen Ansprüche.

10. Sitzreihe (25) mit mindestens zwei Fluggastsitzen (26, 27) nach dem vorhergehenden Anspruch 9.

11. Flugzeug mit einem Fluggastsitz nach dem vorangegangenen Anspruch 9 oder mit einer Sitzreihe nach dem vorangegangenen Anspruch 10 oder mit einer Beinauflage nach einem der vorangegangenen Ansprüche 1 bis 8.

## Claims

1. Legrest (29) of an aircraft passenger seat (27) having a device (37), wherein the device (37) comprises a housing, wherein the housing has two housing halves (38, 39), wherein the two housing halves (38, 39) are pivotably movably connected to one another, wherein the device is arranged between upholstered locations on the legrest, wherein the housing is designed in such a way that a lifejacket (45) for an aircraft passenger can be stowed therein, wherein a seat cover of the aircraft passenger seat (27) is arranged on a first housing half (38) of the two housing halves (38, 39), with the result that the device (37) forms part of a useful surface (43) of the legrest (29), wherein the device (37) is arranged on a basic structure (51) of the legrest (29), wherein the two housing halves are made from metal and/or a stable plastic, wherein each housing half has a main side element, wherein side elements protruding transversely in relation thereto are present on each of the main side elements, wherein two side elements of one housing half are spaced apart from one another and are formed opposite one another, wherein a spacing between the two spaced-apart and oppositely situated side elements of the first one of the two housing halves (38, 39) is greater than a spacing between the two spaced-apart and oppositely situated side elements of a second one of the two housing halves (38, 39), such that the side elements of the first and the second housing half (38, 39) overlap in a closed position of the housing, wherein the main side element of the second housing half (39) rests directly on the basic structure or the basic structure forms the main side element of the second housing half (39).

2. Legrest (29) according to the preceding Claim 1, **characterized in that** the second housing half (39) comprises a holding member in the form of a transverse yoke (65), which extends between and is arranged on two long side elements (58, 59) of the second housing half (39), as a result of which, in the arranged state on the second housing half (39), the lifejacket is held on the second housing half (39), and the lifejacket is thus prevented from inadvertently falling out of the device.

3. Legrest (29) according to either of the preceding claims, **characterized in that** the two housing halves (38, 39) are non-detachably and pivotably movably connected to one another.

4. Legrest (29) according to one of the preceding claims, **characterized in that** the first housing half (38) has a through-opening (55), with the result that a visible element (56) can be brought out of an interior (44) of the housing through the through-opening (55).

5. Legrest (29) according to one of the preceding claims, **characterized in that** the device (37) has an information means (53), wherein it is possible to attach information about what is located (45) in the interior (44) of the housing of the device (37) to the information means (53).

6. The legrest (29) according to one of the preceding claims, **characterized in that** the device (37) has a sealing device (48), so that a seal can be attached to the device (37).

7. Legrest (29) according to one of the preceding claims, **characterized in that** the device (37) has a closure mechanism (40), wherein the closure mechanism (40) fixes the two housing halves (38, 39) in place in relation to one another in the closed position, wherein the closure mechanism (40) comprises a pulling element (41), wherein the closure mechanism (40) is designed in such a way that, by pulling on the pulling element (41), parts of the closuremechanism (40) can be moved in such a way that the housing halves (38, 39) are detached from one another in the region of the closure mechanism (40).

8. Legrest (29) according to one of the preceding claims, **characterized in that** the main side element (62) of the second housing half (39) is an integral component of the basic structure (51) of the legrest (29).

9. Aircraft passenger seat (27) with a legrest (29) according to one of the preceding claims.

10. Seat row (25) having at least two aircraft passenger seats (26, 27) according to the preceding Claim 9.

11. Aircraft having an aircraft passenger seat according to the preceding Claim 9 or having a seat row according to the preceding Claim 10 or having a legrest according to one of the preceding Claims 1 to 8.

## Revendications

1. Repose-jambes (29) pour un siège passager d'aéronef (27) comprenant un dispositif (37), le dispositif (37) comportant un boîtier, le boîtier présentant deux moitiés de boîtier (38, 39), les deux moitiés de boîtier (38, 39) étant reliées l'une à l'autre de manière mobile en pivotement, le dispositif étant disposé sur le repose-jambes entre des rembourrages du repose-jambes, le boîtier étant réalisé de telle sorte qu'un gilet de sauvetage (45) pour un passager d'aéronef peut être stocké dans celui-ci, une housse du siège passager d'aéronef (27) étant disposée sur une première moitié de boîtier (38) des deux moitiés de boîtier (38, 39), de sorte que le boîtier (37) forme une partie d'une surface utile (43) du repose-jambes (29), le dispositif (37) étant disposé sur une structure de base (51) du repose-jambes (29), les deux moitiés de boîtier étant réalisées à partir de métal et/ou à partir d'une matière synthétique stable, chaque moitié de boîtier présentant un élément latéral principal, des éléments latéraux faisant saillie transversalement à chacun des éléments latéraux principaux étant présents sur chacun des éléments latéraux principaux, deux éléments latéraux d'une moitié de boîtier étant réalisés de manière espacée l'un de l'autre et de manière opposée, une distance entre les deux éléments latéraux espacés et opposés de la première des deux parties de boîtier (38, 39) étant supérieure à une distance des deux éléments latéraux espacés et opposés d'une seconde des deux parties de boîtier (38, 39), de telle sorte que, dans une position fermée du boîtier, les éléments latéraux de la première et de la seconde moitié de boîtier (38, 39) soient présents en chevauchement, l'élément latéral principal de la seconde moitié de boîtier (39) étant présent en appui direct sur la structure de base ou la structure de base formant l'élément latéral principal de la seconde moitié de boîtier (39).

2. Repose-jambes (29) selon la revendication 1 précédente, **caractérisé en ce que** la seconde moitié de boîtier (39) comporte un organe, de retenue sous la forme d'un étrier transversal (65), lequel s'étend entre deux éléments latéraux longs (58, 59) de la seconde moitié de boîtier (39) et est disposé sur ceux-ci, de telle sorte que, dans l'état disposé sur la seconde moitié de boîtier (39), le gilet de sauvetage soit retenu sur la seconde moitié de boîtier (39) et qu'ainsi une sortie accidentelle du gilet de sauvetage hors du dispositif soit empêchée.

3. Repose-jambes (29) selon l'une des revendications précédentes, **caractérisé en ce que** les deux moitiés de boîtier (38, 39) sont reliées l'une à l'autre de manière non amovible et de manière mobile en pivotement.

4. Repose-jambes (29) selon l'une des revendications précédentes, **caractérisé en ce que** la première moitié de boîtier (38) présente une ouverture traversante (55), de sorte qu'un élément visible (56) puisse être amené à partir d'un intérieur (44) du boîtier à travers l'ouverture traversante (55) vers l'extérieur.

5. Repose-jambes (29) selon l'une des revendications précédentes, **caractérisé en ce que** le dispositif (37) présente un moyen d'information (53), une information concernant le contenu (45) dans l'intérieur (44) du boîtier du dispositif (37) pouvant être fixée sur le moyen d'information (53).

6. Repose-jambes (29) selon l'une des revendications précédentes, **caractérisé en ce que** le dispositif (37) présente un moyen de scellement (48), de sorte qu'un sceau peut être fixé au dispositif (37).

7. Repose-jambes (29) selon l'une des revendications précédentes, **caractérisé en ce que** le dispositif (37) présente un mécanisme de fermeture (40), le mécanisme de fermeture fixant les deux moitiés de boîtier (38, 39) l'une par rapport à l'autre dans la position fermée, le mécanisme de fermeture (40) comportant un élément de traction (41), le mécanisme de fermeture (40) étant réalisé de telle sorte que, par traction sur l'élément de traction (41), des parties du mécanisme de fermeture (40) peuvent être déplacées de telle sorte que les moitiés de boîtier (38, 39) soient détachées l'une de l'autre dans la région du mécanisme de fermeture (40).

8. Repose-jambes (29) selon l'une des revendications précédentes, **caractérisé en ce que** l'élément latéral principal (62) des deux moitiés de boîtier (39) fait partie intégrante de la structure de base (51) du repose-jambes (29).

9. Siège passager d'aéronef (27) comprenant un repose-jambes (29) selon l'une des revendications précédentes.

10. Rangée de sièges (25) comprenant au moins deux sièges passager d'aéronef (26, 27) selon la revendication 9 précédente.

11. Aéronef comprenant un siège passager d'aéronef selon la revendication 9 précédente ou comprenant une rangée de sièges selon la revendication 10 précédente ou comprenant un repose-jambes selon l'une des revendications 1 à 8 précédentes.
